# EUROPÄISCHE PATENTSCHRIFT

(11) **EP 2 364 586 B1**
(45) Veröffentlichungstag und Bekanntmachung des Hinweises auf die Patenterteilung: **04.03.2015**
(21) Anmeldenummer: 11155748.4
(22) Anmeldetag: 24.02.2011
(51) Int. Cl.: A01D 43/10, A01D 43/08

(54) **Erntemaschine mit einer Transporteinrichtung für den Ein- und Ausbau einer Erntegutbearbeitungseinrichtung**
Harvesting machine with a transport device for inserting and removing a crop processing device
Récolteuse dotée d'un dispositif de transport pour le montage et le démontage d'un dispositif de traitement de récoltes

(30) Priorität: 10.03.2010 DE 102010002730
(43) Veröffentlichungstag der Anmeldung: 14.09.2011
(73) Patentinhaber: DEERE & COMPANY, Moline, Illinois 61265-8098 (US)
(72) Erfinder: Schäfer, Rainer, 66482, Zweibrücken (DE); Engel, Manfred, 66484, Großsteinhausen (DE); Spallek, Christoph, 67685, Weilerbach (DE)
(74) Vertreter: Holst, Sönke

(56) Entgegenhaltungen:
- EP-A1- 1 869 966
- DE-A1- 3 442 578
- FR-A1- 2 841 887
- JP-A- 3 111 396
- US-A1- 2009 152 226

## Beschreibung

Die Erfindung betrifft eine landwirtschaftliche Erntemaschine mit einem Rahmen, einer Erntegutbearbeitungseinrichtung, die gegenüber dem Rahmen zwischen einer Betriebsstellung, in der sie in einen von Erntegut durchströmbaren Kanal eingefügt ist, und einer Außerbetriebsstellung außerhalb des Kanals bewegbar ist, und mit einer Transporteinrichtung mit einem ersten, um eine erste vertikale Achse schwenkbar am Rahmen der Erntemaschine angelenkten Arm, einer Winde und einem mit der Winde verbundenen Zugmittel zum Anheben der Erntegutbearbeitungseinrichtung aus ihrer Außerbetriebsstellung und zum Bewegen der Erntegutbearbeitungseinrichtung in eine Position außerhalb der Erntemaschine.

### Stand der Technik

Feldhäcksler dienen zur Ernte von ganzen Pflanzen oder ihren Teilen, die im Betrieb mittels eines Erntevorsatzes von einem Feld aufgenommen, durch Vorpresswalzen zusammengedrückt und einer Messertrommel zugeführt werden, deren Häckselmesser die Pflanzen im Zusammenwirken mit einem Gegenmesser zerschneiden. Anschließend werden die zerschnittenen Pflanzen oder-teile optional einer Konditioniereinrichtung zugeführt und durch eine Nachbeschleunigungseinrichtung in einen Auswurfkrümmer gefördert, der sie auf ein Transportfahrzeug überlädt. Die zerkleinerten Pflanzen dienen üblicherweise als Viehfutter oder zur Biogaserzeugung.

Die Konditioniereinrichtung umfasst üblicherweise zwei oder mehr gegensinnig angetriebene Walzen, die durch Federkraft gegeneinander vorgespannt sind und zwischen denen das Häckselgut hindurchgeführt wird. Sie wird bei der Maisernte benötigt, um die im Häckselgut enthaltenen Körner anzuschlagen und die Verdaulichkeit des Futters zu verbessern. Bei der Grasernte ist eine Konditionierung hingegen nicht erforderlich, weshalb die Walzen der Konditioniereinrichtung entweder in eine Stellung verbracht werden, in der zwischen ihnen ein hinreichend großer Spalt verbleibt, oder die Konditioniereinrichtung wird aus dem Kanal zwischen der Häckseltrommel und dem Nachbeschleuniger herausbewegt und ein hohles Gehäuse wird an ihrer Stelle dort eingefügt. Die Konditioniereinrichtung wird üblicherweise, falls sie für längere Zeit nicht mehr benötigt wird, aus dem Feldhäcksler entnommen und eingelagert.

Eine Erntemaschine eingangs genannter Art wird in der EP 1 869 966 A1 beschrieben. Bei einem Feldhäcksler ist rückwärtig des Kanals zwischen der Häckseltrommel und einem Nachbeschleuniger ein begehbarer Wartungsraum vorgesehen, in den die Konditioniereinrichtung bei Nichtgebrauch hineinbewegt werden kann. An einem mit dem Rahmen des Feldhäckslers verbundenen Gestell ist ein Arm um eine vertikale Achse schwenkbar angelenkt. Am Arm ist eine entlang des Arms verschiebbar gelagerte Winde angebracht. Ein von der Winde aufwickelbares Zugmittel dient zum Anheben der Konditioniereinrichtung. Zum Ausbau wird der Arm mit der Winde demnach oberhalb der nach hinten verstellten Konditioniereinrichtung positioniert, das Zugmittel an der Konditioniereinrichtung arretiert und letztere mit der Winde angehoben. Beim Herausbewegen der Konditioniereinrichtung werden jeweils nacheinander oder gleichzeitig die Winde ein Stück entlang des Arms verschoben und der Arm um einen Winkel um die Hochachse verschwenkt, um ein Anschlagen der Konditioniereinrichtung an Wänden des Wartungsraums zu verhindern. Schließlich befindet sich die Konditioniereinrichtung außerhalb des Wartungsraums und kann dort auf den Erdboden oder ein Fahrzeug abgelassen werden. Bei einer anderen Ausführungsform besteht der Arm aus zwei teleskopierbaren Teilen und die Winde ist am äußeren Ende des äußeren Teils befestigt.

Die US 2009/0152226 A1 beschreibt einen Kran zum Einsatz innerhalb von Produktionsräumen, der sich aus einer am Boden befestigten Säule, einem daran um die Hochachse schwenkbar befestigten ersten Arm und einem am äußeren Ende des ersten Armes befestigten, zweiten Arm aufbaut, an dessen äußeren Ende eine zu bewegende Last angehängt ist, deren Winde am ersten Arm angebracht ist. Um zu erreichen, dass die Last an der vom Bediener gewünschten Stelle stehenbleibt, ist eine Höhenverstellung für den zweiten Arm vorgesehen, um das Bestreben der Last auszugleichen, die Arme in die niedrigste Position zu ziehen.

Die FR 2 841 887 A1 beschreibt einen Kran für nicht näher beschriebene Einsatzzwecke mit einer senkrechten Säule, einem um die Hochachse schwenkbar daran angelenkten ersten Arm und einen am äußeren Ende um die Hochachse daran schwenkbar angelenkten, zweiten Arm. Zum Heben der Last ist ein Elektromotor vorgesehen, der in der Nähe des inneren Endes des zweiten Arms angebracht ist und eine Haspel betätigt, auf der ein Seil aufgewickelt ist, das um eine am äußeren Ende des zweiten Arms angebrachte Rolle umläuft.

Die DE 34 42 578 A1 zeigt einen LKW mit einem an der Ladefläche befestigten Kran, dessen grundsätzlicher Aufbau dem Kran der FR 2 841 887 A1 entspricht, wobei der zweite Arm jedoch zur Verlängerung der Reichweite teleskopierbar ist.

### Aufgabe

In der EP 1 869 966 A1 ist die Winde beim Aus- und Einbau der Konditioniereinrichtung gegenüber dem Arm (oder der teleskopierbare Teil des Arms gegenüber dem um die Hochachse drehbar angelenkten Teil des Arms) durch den Bediener von Hand zu verschieben. Die recht hohe, oft über 100 kg liegende Masse der Konditioniereinrichtung führt zu einem Verkanten der verschiebbaren Elemente, was wiederum die Verschiebung recht schwergängig macht.

Das der Erfindung zu Grunde liegende Problem wird darin gesehen, eine Erntemaschine mit einer Transporteinrichtung mit einem ersten, um die Hochachse schwenkbar am Rahmen der Erntemaschine angelenkten Arm, einer Winde und einem mit der Winde verbundenen Zugmittel zum Anheben der Erntegutbearbeitungseinrichtung aus ihrer Außerbetriebsstellung und zum Bewegen der Erntegutbearbeitungseinrichtung in eine Position außerhalb der Erntemaschine dahingehend zu verbessern, dass eine die Bewegung der Erntegutbearbeitungseinrichtung aus der Erntemaschine hinaus (und in der Gegenrichtung) erleichtert wird.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine landwirtschaftliche Erntemaschine umfasst ein Rahmen und eine Erntegutbearbeitungseinrichtung, die gegenüber dem Rahmen zwischen einer Betriebsstellung, in der sie in einen von Erntegut durchströmbaren Kanal eingefügt ist, und einer Außerbetriebsstellung außerhalb des Kanals bewegbar ist. Eine Transporteinrichtung dient zum Anheben der Erntegutbearbeitungseinrichtung aus ihrer Außerbetriebsstellung und zum Bewegen der Erntegutbearbeitungseinrichtung in eine Position außerhalb der Erntemaschine und in umgekehrter Richtung. Die Transporteinrichtung umfasst einen ersten, um eine erste vertikale Achse schwenkbar am Rahmen der Erntemaschine angelenkten Arm und einen zweiten Arm, der um eine zweite vertikale Achse schwenkbar am äußeren Ende des ersten Arms angelenkt ist. Ein flexibles Zugmittel, beispielsweise ein Seil oder eine Kette, ist am zweiten Arm abgestützt und kann mittels einer insbesondere manuell oder elektromotorisch betätigten Winde nach oben gezogen oder nach unten abgelassen werden.

Die vertikale Bewegung der Erntegutbearbeitungseinrichtung erfolgt mittels der Winde und des Zugmittels, das lösbar mit der Erntegutbearbeitungseinrichtung verbunden werden kann, z. B. durch einen Haken. Das Zugmittel wird durch die Winde nach oben gezogen oder nach unten abgelassen, sodass auch die Erntegutbearbeitungseinrichtung in vertikaler Richtung bewegt wird. Die horizontale Bewegung des Zugmittels mit der Erntegutbearbeitungseinrichtung erfolgt durch ein gleichzeitig oder nacheinander durchgeführtes Verschwenken der beiden Arme um die beiden Achsen. Eine Verschiebebewegung der Winde gegenüber einem Arm oder der Arme gegeneinander erübrigt sich demnach. Auf diese Weise werden die Reibung und die vom Bediener aufzuwendenden Kräfte bei der horizontalen Bewegung der Erntegutbearbeitungseinrichtung vermindert.

Das Zugmittel wird durch eine am äußeren Ende des zweiten Arms angebrachte Rolle umgelenkt und die Winde ist im Abstand vom äußeren Ende des zweiten Arms am zweiten Arm befestigt. Ein Vorteil dieser Anordnung liegt darin, dass die Winde nicht unterhalb des Arms anzubringen ist, sodass ein größerer vertikaler Bewegungsbereich für die Erntegutbearbeitungseinrichtung zur Verfügung steht.

### Ausführungsbeispiel

In den Zeichnungen ist ein nachfolgend näher beschriebenes Ausführungsbeispiel der Erfindung dargestellt. Es zeigt:
- Fig. 1: eine selbstfahrende Erntemaschine in Seitenansicht und in schematischer Darstellung,
- Fig. 2: die Erntemaschine der Figur 1 von der anderen Seite aus betrachtet,
- Fig. 3: eine Draufsicht auf den Wartungsraum der Erntemaschine mit einer oberhalb der in ihrer Außerbetriebsstellung befindlichen Erntegutbearbeitungseinrichtung positionierten Transporteinrichtung,
- Fig. 4: eine Draufsicht auf den Wartungsraum der Erntemaschine mit einer mittels der Transporteinrichtung angehobenen und aus der Außerbetriebsstellung nach hinten verbrachten Erntegutbearbeitungseinrichtung,
- Fig. 5: eine Draufsicht auf den Wartungsraum der Erntemaschine mit einer mittels der Transporteinrichtung teilweise aus dem Wartungsraum verbrachten Erntegutbearbeitungseinrichtung,
- Fig. 6: eine Draufsicht auf den Wartungsraum der Erntemaschine mit einer mittels der Transporteinrichtung komplett aus dem Wartungsraum verbrachten Erntegutbearbeitungseinrichtung, und
- Fig. 7: eine Draufsicht auf den Wartungsraum der Erntemaschine mit einer mittels der Transporteinrichtung außerhalb der Umrisse der Erntemaschine verbrachten Erntegutbearbeitungseinrichtung.

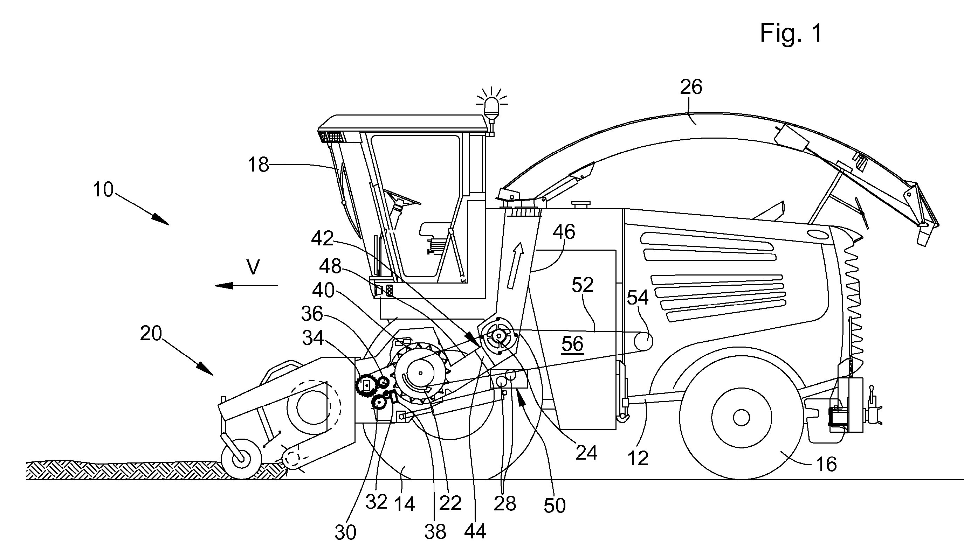

Eine in der Figur 1 gezeigte Erntemaschine 10 in der Art eines selbstfahrenden Feldhäckslers 10 baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 in Form einer Pickup einsehbar ist. Mittels der Erntegutaufnahmevorrichtung 20 vom Boden aufgenommenes Gut, z. B. Gras oder dergleichen, wird im Erntebetrieb einer mit Häckselmessern 40 besetzten Häckseltrommel 22 zugeführt, die es im Zusammenwirken mit einer Gegenschneide 38 in kleine Stücke häckselt und es einem Nachbeschleuniger 24 aufgibt. Zwischen der Erntegutaufnahmevorrichtung 20 und der Häckseltrommel 22 wird das Gut durch untere Vorpresswalzen 30, 32 und obere Vorpresswalzen 34, 36 vorverdichtet und transportiert. Das Gut verlässt die Erntemaschine 10 stromab des Nachbeschleunigers 24 zu einem nebenher fahrenden Anhänger über einen Austragsschacht 46 und einen um die Hochachse drehbaren und abwurfendeseitig höhenverstellbaren Auswurfkrümmer 26. Im Folgenden beziehen sich Richtungsangaben, wie vorn und hinten auf die Vorwärtsrichtung V der Erntemaschine 10, die in der Figur 1 nach links verläuft.

In einem nach hinten und oben ansteigenden, vom Häckselgut durchströmten Kanal 48 zwischen der Häckseltrommel 22 und der Fördervorrichtung 24 befindet sich ein Abschnitt 42, in den anstelle eines bei der Grasernte verwendeten hohlen Gehäuses 44 wahlweise eine Erntegutbearbeitungseinrichtung 50 in Form einer Konditioniereinrichtung mit zwei Walzen 28 eingefügt werden kann. Der Abschnitt 42 stellt somit eine Unterbrechung im Kanal 48 dar, in welche alternativ die Erntegutbearbeitungseinrichtung 50 oder das Gehäuse 44 eingefügt werden kann. Die Erntegutbearbeitungseinrichtung 50 wird insbesondere bei der Maisernte benötigt, um im Häckselgut enthaltene Körner zwecks besserer Verdaulichkeit anzuschlagen. Bei der Maisernte wird die in der Figur 1 gezeigte Erntegutaufnahmevorrichtung 20 durch einen Maiserntevorsatz ersetzt. Bei der Grasernte ist, wie in der Figur 1 dargestellt, jedoch das Gehäuse 44 in den Abschnitt 40 eingefügt, da keine Nachbearbeitung vorgesehen ist.

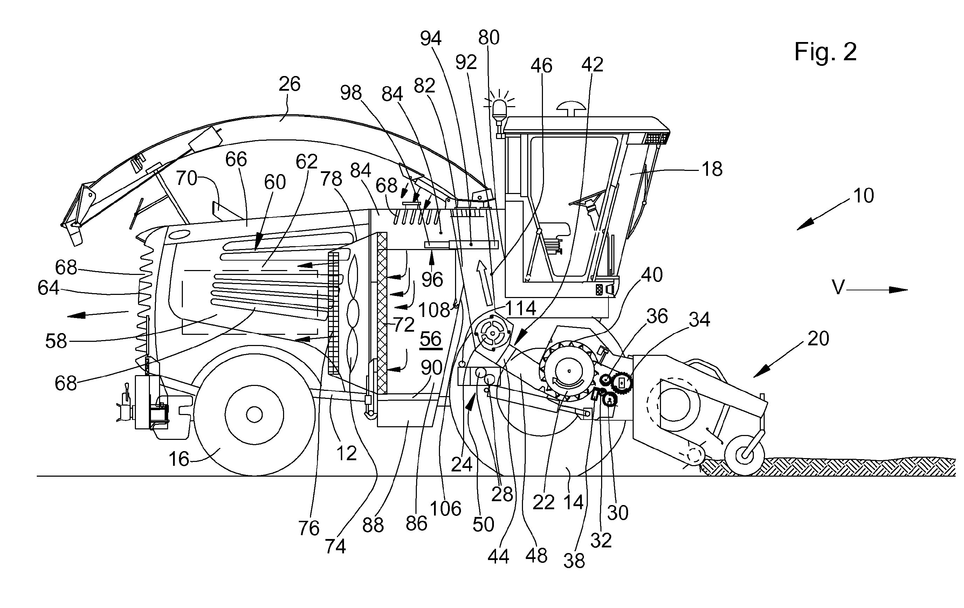

Der Antrieb der Häckseltrommel 22 und des Nachbeschleunigers 24 erfolgt über einen Riemen 52, der durch eine Riemenscheibe 54 angetrieben wird, die über ein geeignetes Getriebe von einem rückwärtig eines Wartungsraums 56 angeordneten Verbrennungsmotor 58 (vgl. Figur 2) angetrieben wird.

Die Figur 2 zeigt eine Ansicht der Erntemaschine 10 aus Figur 1 von der gegenüberliegenden, in Vorwärtsrichtung V rechten Seite. Die Energieversorgung zum Antrieb des Erntevorsatzes 20, der Vorpresswalzen 30-36, der Erntegutbearbeitungseinrichtung 50 und des Nachbeschleunigers 24 sowie weiterer angetriebener Elemente und Aktoren der Erntemaschine 10 erfolgt (über mechanische, hydraulische und/oder elektrische Antriebsstränge) von einem Verbrennungsmotor 58 aus, der oberhalb der rückwärtigen Räder 16 innerhalb eines Motorraums 60 angeordnet ist. Der Motorraum 60 wird zu beiden Seiten hin durch Seitenwände 62, nach hinten durch eine Rückwand 64 und nach oben durch ein Dach 66 umgrenzt. Die Wände 62, 64 und das Dach 66 haben in der Regel keine tragende Funktion, sondern dienen nur zur Abschottung des Verbrennungsmotors 58 nach außen und sind an sie tragenden Streben (nicht gezeigt) befestigt, die am Rahmen 12 angebracht sind. Die Wände 62, 64 und möglicherweise, aber nicht notwendigerweise auch das Dach 66 sind mit schlitzförmigen Öffnungen 68 ausgestattet, durch die Luft austreten kann. Durch eine Öffnung im Dach 66 erstreckt sich auch ein Auspuff 70 des Verbrennungsmotors 58.

Der Motorraum 60 wird nach vorn durch eine Siebeinrichtung 72 begrenzt, die ein kreisförmiges, perforiertes Filterelement umfasst, welches durch einen Antrieb um seine sich horizontal und in Vorwärtsrichtung V erstreckende Mittelachse in Drehung versetzbar ist. Rückwärtig der Siebeinrichtung 72 befindet sich ein angetriebenes Gebläse 74 mit einer um eine koaxial zur Mittelachse des Filterelements verlaufenden Drehachse. Rückwärtig des Gebläses 74 befinden sich verschiedene Kühler 76, bei denen es sich unter anderem um einen Ölkühler des Verbrennungsmotors 58, einen Ladeluftkühler, einen Hydraulikölkühler und einen Verdampfer für eine Klimaanlage für die Fahrerkabine 18 handeln kann. Nach oben und zu den Seiten hin werden die Siebeinrichtung 72, das Gebläse 74 und die Kühler 76 durch ein Gehäuse 78 abgedichtet, um den Luftstrom zu konzentrieren. Nach dem Passieren der Kühler 76 umströmt der Luftstrom noch den Verbrennungsmotor 58 und gelangt dann durch die Öffnungen 68 nach außen. Es wäre übrigens auch denkbar, die Erntemaschine 10 mit zwei oder mehr Verbrennungsmotoren 58 und zugehörigen Kühlern 76 auszustatten.

An der Vorderseite der Siebeinrichtung 72 ist der begehbare Wartungsraum 56 gebildet, der nach vorn durch eine hinter der Rückwand der Fahrerkabine 18 liegende Wand 80, die Rückwand 82 des feststehenden Auswurfschachts 46 und das Gehäuse des Nachbeschleunigers 24 begrenzt wird. Nach oben wird der Wartungsraum 56 durch ein mit Lufteintrittschlitzen 68 ausgestattetes Dach 84 begrenzt. Durch die Lufteintrittschlitze 68 saugt das Gebläse 74 im Betrieb die Umgebungsluft ein. Schließlich wird der Innenraum 56 zur Seite durch Wände 84 begrenzt, in die eine Tür 86 eingefügt ist. An der Unterseite des Wartungsraums 56 befindet sich ein Kraftstofftank 88, an dessen Oberseite ein Podest 90 angeordnet ist, das zur Seite hin über den Wartungsraum 56 hinausragt.

Am Rahmen 12 der Erntemaschine 10 ist vor dem Schacht 46 ein sich horizontal und quer zur Vorwärtsrichtung V erstreckender Querträger 92 angebracht, der auch den Schacht 46 und die Drehlagerung des Auswurfkrümmers 26 abstützt und über weitere Trägerelemente (nicht gezeigt) mit dem Rahmen 12 verbunden ist. Der Querträger 92 haltert einen Längsträger 94, der sich an der rechten Seite des Schachts 46 horizontal nach hinten erstreckt. Am rückwärtigen Ende des Längsträgers 94 ist eine Transporteinrichtung 96 angelenkt, die zum Ein- und Ausbau der Erntegutbearbeitungseinrichtung 50 in und aus der Erntemaschine 10 dient. Die Transporteinrichtung 96 setzt sich aus einem ersten Arm 98, einem zweiten Arm 100, einer Winde 102, einem Zugmittel 106 in Form eines Seils mit einem Haken 108 und einer Rolle 104 zusammen. Der erste Arm 98 ist um eine erste, sich vertikal erstreckende Achse 110 schwenkbar am Längsträger 94 gelagert. Der zweite Arm 100 ist um eine zweite, sich vertikal erstreckende Achse 112 schwenkbar am äußeren Ende des ersten Arms 98 gelagert. Die Winde 102 ist in der unmittelbaren Nachbarschaft der zweiten Achse 112 am zweiten Arm 100 befestigt. Sie umfasst eine Aufwickeleinrichtung für das Zugmittel 106 und einen manuell oder (insbesondere elektromotorisch) fremdkraftbetätigten Antrieb für die Aufwickeleinrichtung. Das Zugmittel 106 ist von der Winde 102 ausgehend um die Rolle 104 geführt und erstreckt sich von dort nach unten bis zum Haken 108. Die Erntegutbearbeitungseinrichtung 50 ist mit einer Öse 114 versehen, in welcher der Haken 108 Aufnahme finden kann.

Nach alledem erfolgt der Ausbau der Erntegutbearbeitungseinrichtung 50 aus der Erntemaschine 10 folgendermaßen. Falls sich die Erntegutbearbeitungseinrichtung 50 in der Betriebsstellung im Abschnitt 40 des Kanals 48 befindet, wird sie zunächst in die Außerbetriebsstellung verbracht, wie in den Figuren 1 und 2 dargestellt. Ein besonders geeigneter Mechanismus hierfür ist in der DE 10 2010 002 509 A1 beschrieben.

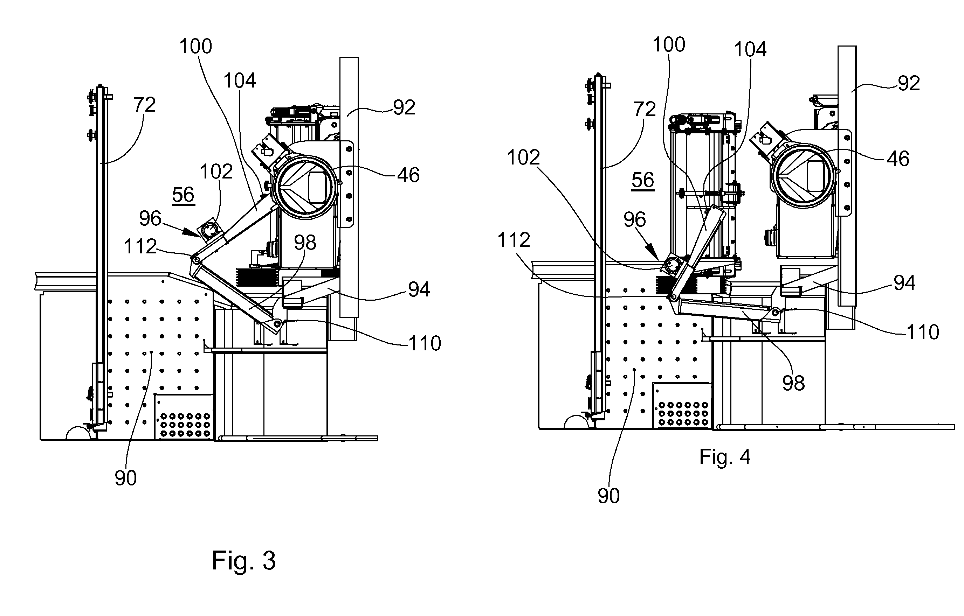

In der Außerbetriebsstellung ist ein von der Welle des Nachbeschleunigers 24 angetriebener Riemen, der zum Antrieb der Walzen 28 der Erntegutbearbeitungseinrichtung 50 dient, hinreichend entspannt, sodass er unschwer abgenommen werden kann. Anschließend werden die Arme 98, 100 der Transporteinrichtung 96 in die in der Figur 3 gezeigte Stellung verbracht, sodass sich die Rolle 104 und der Haken 108 unmittelbar oberhalb der Öse 114 befinden. Nachdem eine Arretierung der Erntegutbearbeitungseinrichtung 50 von ihrer Halterung in der Erntemaschine 10 gelöst wurde, wird nun die Winde 102 betätigt, um das Zugmittel 106 abzulassen und der Haken 108 wird in der Öse 114 verankert. Anschließend wird die Winde 102 aktiviert, um die Erntegutbearbeitungseinrichtung 50 aus der Außerbetriebsstellung anzuheben. Sie kann dann in eine Stellung in beliebiger Höhe oberhalb des Podests 90 und des Bodens des Wartungsraums 56 verbracht werden.

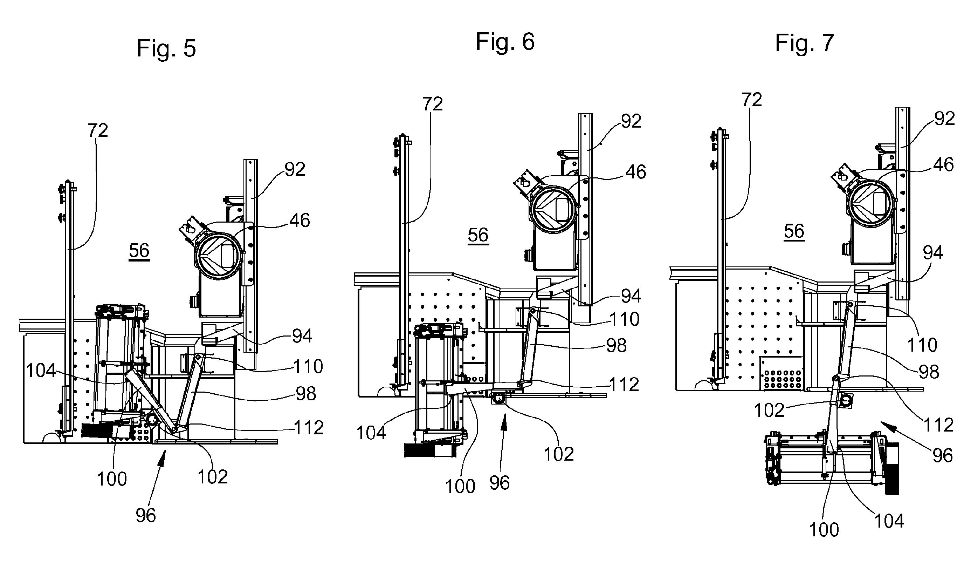

Um die Erntegutbearbeitungseinrichtung 50 nun aus dem Wartungsraum 56 zu bewegen, werden die Arme 98, 100 im Gegenuhrzeigersinn um die Achsen 110, 112 gedreht, sodass die Stellung gemäß Figur 4 erreicht wird, in welcher sich die Erntegutbearbeitungseinrichtung 50 rückwärtig des Schachts 46 mittig im Wartungsraum 56 befindet. Wird der erste Arm 98 nun weiter um die Achse 110 im Gegenuhrzeigersinn gedreht, gelang die Erntegutbearbeitungseinrichtung 50 zum Teil aus dem Wartungsraum 56 hinaus (Figur 5), wobei der zweite Arm 100 im Uhrzeigersinn um die Achse 112 gedreht werden kann, um eine Kollision der Erntegutbearbeitungseinrichtung 50 mit der Siebeinrichtung 72 zu verhindern. Wenn sich der erste Arm 98 näherungsweise quer zur Vorwärtsrichtung V erstreckt, wird der zweite Arm 100 weiter im Gegenuhrzeigersinn um die Achse 112 nach außen geschwenkt, um die Erntegutbearbeitungseinrichtung 50 komplett aus dem Wartungsraum 56 zu bewegen (Figur 6), bis sie schließlich seitlich neben dem Podest 90 außerhalb der Konturen der Erntemaschine 10 hängt (Figur 7). Dort kann sie mittels der Winde 102 abgelassen und auf den Erdboden oder ein anderes Fahrzeug gestellt werden. Eine unerwünschte Drehung der Erntegutbearbeitungseinrichtung 50 kann durch den sie haltenden Bediener oder die Verwendung einer Kette als Zugmittel 106 verhindert werden. Der Wiedereinbau der Erntegutbearbeitungseinrichtung 50 erfolgt in umgekehrter Reihenfolge und Richtung.

Die Transporteinrichtung 96 kann permanent oder abnehmbar am Längsträger 94 befestigt sein, um sie bei Nichtgebrauch im Wartungsraum 56 oder an anderer Stelle lagern zu können und dann den Einstieg in den Wartungsraum 56 zu erleichtern. Weiterhin sind verschiedene Modifikationen möglich. So kann das Verschwenken der Arme 98, 100 um die Achsen 110, 112 durch fremdkraftbetätigte Aktoren erfolgen, die durch einen Bediener oder selbsttätig durch eine Steuerung (nicht gezeigt) angesteuert werden, um die Transporteinrichtung auf vorgegebenen Bahnen, wie sie in den Figuren 3 bis 7 gezeigt sind, zu bewegen. Insbesondere bei einer derartigen Ausführungsform können die Abmessungen des Wartungsraums 56 auch verkleinert werden, da die Anwesenheit eines Bedieners dort nicht unbedingt erforderlich ist. Bei einer manuellen Bewegung der Arme 98, 100 um die Achsen 110, 112 kann der Bediener auch außerhalb des Wartungsraum 56 sein, wenn er die Arme 98, 100 durch geeignete Fernbedienungsmittel (beispielsweise Stangen) von einer Position außerhalb des Wartungsraums 56 aus bewegt.

## Patentansprüche

1. Landwirtschaftliche Erntemaschine (10) mit einem Rahmen (12), einer Erntegutbearbeitungseinrichtung (50), die gegenüber dem Rahmen (12) zwischen einer Betriebsstellung, in der sie in einen von Erntegut durchströmbaren Kanal (48) eingefügt ist, und einer Außerbetriebsstellung außerhalb des Kanals (48) bewegbar ist, und mit einer Transporteinrichtung (96) mit einem ersten, um eine erste vertikale Achse (110) schwenkbar am Rahmen (12) der Erntemaschine (10) angelenkten Arm (98), einer Winde (102) und einem mit der Winde (102) verbundenen Zugmittel (106) zum Anheben der Erntegutbearbeitungseinrichtung (50) aus ihrer Außerbetriebsstellung und zum Bewegen der Erntegutbearbeitungseinrichtung (50) in eine Position außerhalb der Erntemaschine (10), **dadurch gekennzeichnet, dass** die Transporteinrichtung (96) einen das Zugmittel (106) halternden, zweiten Arm (100) umfasst, der um eine zweite vertikale Achse (112) schwenkbar am äußeren Ende des ersten Arms (100) angelenkt ist, dass das Zugmittel (106) durch eine am äußeren Ende des zweiten Arms (100) angebrachte Rolle (104) umgelenkt wird und dass die Winde (102) im Abstand vom äußeren Ende des zweiten Arms (100) am zweiten Arm (100) befestigt ist.

2. Erntemaschine (10) nach Anspruch 1, **dadurch gekennzeichnet, dass** sich die Erntegutbearbeitungseinrichtung (50) in ihrer Außerbetriebsstellung rückwärtig des Kanals (48) befindet.

3. Erntemaschine (10) nach Anspruch 1 oder 2, **dadurch gekennzeichnet, dass** sich die Erntegutbearbeitungseinrichtung (50) in ihrer Außerbetriebsstellung in einem begehbaren Wartungsraum (56) befindet.

4. Erntemaschine (10) nach einem der Ansprüche 1 bis 3, **dadurch gekennzeichnet, dass** die Arme (98, 100) derart bemessen sind, dass die Erntegutbearbeitungseinrichtung (50) seitlich neben der Erntemaschine (10) auf dem Boden absetzbar ist.

## Claims

1. Agricultural harvesting machine (10) having a frame (12), a crop processing device (50) which in relation to the frame (12) is movable between an operating position, in which said crop processing device (50) is inserted into a duct (48) through which a crop is capable of flowing, and a disabled position which is outside the duct (48), and having a conveying device (96) having a first arm (98) which is articulated on the frame (12) of the harvesting machine (10) so as to be pivotable about a first vertical axle (110), a winch (102) and a traction means (106), which is connected to the winch (102), for raising the crop processing device (50) from its disabled position and for moving the crop processing device (50) into a position which is outside the harvesting machine (10), **characterized in that** the conveying device (96) comprises a second arm (100) which holds the traction means (106) and which is articulated on the outer end of the first arm (98) so as to be pivotable about a second vertical axle (112), **in that** that the traction means (106) is deflected by a roller (104) which is attached on the outer end of the second arm (100), and **in that** the winch (102) is fastened on the second arm (100) so as to be spaced apart from the outer end of the second arm (100).

2. Harvesting machine (10) according to Claim 1, **characterized in that** the crop processing device (50) in its disabled position is situated so as to be rearward of the duct (48).

3. Harvesting machine (10) according to Claim 1 or 2, **characterized in that** the crop processing device (50) in its disabled position is situated in a maintenance space (56) which is accessible on foot.

4. Harvesting machine (10) according to one of Claims 1 to 3, **characterized in that** the arms (98, 100) are dimensioned such that the crop processing device (50) is landable on the ground so as to be laterally beside the harvesting machine (10).

## Revendications

1. Récolteuse agricole (10) comprenant un châssis (12), un dispositif de traitement de récoltes (50) qui peut être déplacé par rapport au châssis (12) entre une position de fonctionnement dans laquelle il est introduit dans un canal (48) dans lequel peut s'écouler le produit de récolte et une position hors fonctionnement à l'extérieur du canal (48), et comprenant un dispositif de transport (96) avec un premier bras (98) articulé au châssis (12) de la récolteuse (10) de manière à pouvoir pivoter autour d'un premier axe vertical (110), un treuil (102) et un moyen de traction (106) connecté au treuil (102) pour soulever le dispositif de traitement de récoltes (50) de sa position hors fonctionnement et pour déplacer le dispositif de traitement de récoltes (50) dans une position à l'extérieur de la récolteuse (10), **caractérisée en ce que** le dispositif de transport (96) comprend un deuxième bras (100) retenant le moyen de traction (106), lequel est articulé à l'extrémité extérieure du premier bras (98) de manière à pouvoir pivoter autour d'un deuxième axe vertical (112), **en ce que** le moyen de traction (106) est dévié par un rouleau (104) monté à l'extrémité extérieure du deuxième bras (100) et **en ce que** le treuil (102) est fixé au deuxième bras (100) à distance de l'extrémité extérieure du deuxième bras (100).

2. Récolteuse (10) selon la revendication 1, **caractérisée en ce que** le dispositif de traitement de récoltes (50), dans sa position hors fonctionnement, se trouve à l'arrière du canal (48).

3. Récolteuse (10) selon la revendication 1 ou 2, **caractérisée en ce que** le dispositif de traitement de récoltes (50), dans sa position hors fonctionnement, se trouve dans un espace de maintenance (56) sur lequel on peut marcher.

4. Récolteuse (10) selon l'une quelconque des revendications 1 à 3, **caractérisée en ce que** les bras (98, 100) sont dimensionnés de telle sorte que le dispositif de traitement de récoltes (50) puisse être abaissé au sol latéralement à côté de la récolteuse (10).
